# EUROPEAN PATENT SPECIFICATION

(11) **EP 4 582 525 B1**
(45) Date of publication and mention of the grant of the patent: **22.07.2026**
(21) Application number: 23860506.7
(22) Date of filing: 31.08.2023
(51) Int. Cl.: C10M 169/06, B62D 3/12, C10N 10/10, C10N 10/12, C10N 20/02, C10N 30/06, C10N 40/04, C10N 50/10

(54) **GREASE COMPOSITION AND RACK-AND-PINION-TYPE STEERING DEVICE FILLED WITH SAID GREASE COMPOSITION**
SCHMIERFETTZUSAMMENSETZUNG UND MIT DIESER SCHMIERFETTZUSAMMENSETZUNG GEFÜLLTE ZAHNSTANGENLENKVORRICHTUNG
COMPOSITION DE GRAISSE ET DISPOSITIF DE DIRECTION DE TYPE CRÉMAILLÈRE ET PIGNON COMPRENANT LADITE COMPOSITION DE GRAISSE

(30) Priority: 31.08.2022 JP 2022137714
(43) Date of publication of application: 09.07.2025
(73) Proprietor: Kyodo Yushi Co., Ltd., Fujisawa-shi, Kanagawa 251-8588 (JP)
(72) Inventor: YAMAZAKI, Satoshi, Fujisawa-shi, Kanagawa 251-8588 (JP); SASAKI, Kota, Fujisawa-shi, Kanagawa 251-8588 (JP); TSUTSUI, Daisuke, Fujisawa-shi, Kanagawa 251-8588 (JP)
(74) Representative: Cabinet Beau de Loménie
(86) International application number: PCT/JP2023/031901
(87) International publication number: WO 2024/048744

(56) References cited:
- EP-A1- 3 936 591
- WO-A1-2005/097954
- JP-A- 2004 124 035
- JP-A- 2004 269 722
- JP-A- 2004 269 722
- JP-A- 2007 327 638
- JP-A- 2008 095 841
- JP-A- 2008 120 926
- JP-A- 2013 035 882
- JP-A- 2017 019 987

## Description

### Technical Field

The present invention relates to a grease composition which can be used for a rack-and-pinion-type steering device and a rack-and-pinion-type steering device filled with the composition.

### Background Art

A rack and pinion is a type of gear, and includes a pinion gear which is provided on a front end of a shaft extending from an automotive steering wheel and a rack bar which is formed by gear-cutting a flat plate-shaped bar and is attached at 90 degrees to the traveling direction. The mechanism of these gears is such that the operation of the steering wheel rotates the pinion gear to move the rack horizontally to the right and left in the traveling direction, thus changing the direction of the wheels. In a rack and pinion gear, the gear meshing portions undergo sliding lubrication, so that wear is generated.

A grease composition for lubricating a rack and pinion gear which contains a thickener, a synthetic oil, a mineral oil, molybdenum dithiocarbamate (MoDTC), and a Ca sulfonate to have an extreme-pressure performance that can endure harsh conditions has been reported so far (Patent Literature 1).

### Citation List

### Patent Literature

Patent Literature 1: Japanese Patent No. 4278411

### Summary of Invention

### Problems to be solved by the invention

According to the studies conducted by the present inventors, it was found that although the grease composition of Patent Literature 1 is excellent in inhibiting wear under a sliding motion in rack and pinion gear portions, there has been still room for improvement in the effect of inhibiting fretting wear which is generated under micro oscillation or micro vibration.

Hence, an object of the present invention is to provide a grease composition which can reduce fretting wear (mainly wear of a rack and pinion gear).

In addition, an object of the present invention is to provide a rack-and-pinion-gear-type steering device filled with the grease composition.

### Means for solution of the problems

The present inventors succeeded in inhibiting fretting wear by selecting the type and amount of an additive added. Specifically, the present invention provides a grease composition and a rack-and-pinion-gear-type steering device described below.

The present invention provides a grease composition comprising a thickener, a base oil, and an additive, wherein the additive contains 0.1 to 10% by mass of a molybdenum-containing extreme-pressure agent, 0.1 to 10% by mass of Na sebacate, and 0.1 to 5% by mass of a sulfonate, and a penetration of the grease composition is 235 to 370; preferably wherein the thickener contains Li hydroxystearate or wherein a content of the molybdenum-containing extreme-pressure agent is 0.5 to 5.0% by mass, or wherein an amount of the Na sebacate added is 0.5 to 5.0% by mass, or wherein the sulfonate is a neutral Ca sulfonate, and a content of the neutral Ca sulfonate is 0.5 to 2.0% by mass, or wherein the penetration of the grease composition is 250 to 350, or wherein the base oil is a synthetic hydrocarbon oil and/or a mineral oil and has a kinematic viscosity at 40°C of 15 to 180 mm²/s.

Also disclosed is a rack-and-pinion-gear-type steering device filled with the grease composition.

### Advantageous Effects of Invention

The grease composition of the present invention can effectively inhibit fretting wear. The grease composition of the present invention is also excellent in extreme-pressure performance. In addition, since a working torque at a low temperature is small, the grease composition of the present invention can also inhibit an operation failure.

### Description of Embodiments

### [Thickener]

A thickener of the present invention is not particularly limited. Preferable examples of the thickener include a soap thickener represented by a Li soap and a Li-complex soap, a urea-based thickener represented by a diurea (for example, a diurea that is a reaction product of octylamine and/or octadecylamine and diphenylmethane diisocyanate (MDI), a diurea that is a reaction product of octadecylamine and cyclohexylamine and MDI, a diurea that is a reaction product of p-toluidine or aniline and MDI, a diurea that is a reaction product of cyclohexylamine and aniline and MDI, a diurea that is a reaction product of octylamine and aniline and MDI), an inorganic thickener represented by organoclay and silica, an organic thickener represented by PTFE, and the like. A soap thickener represented by a lithium soap and a lithium complex soap is preferable, and it is preferable that a lithium soap thickener be contained. It is further preferable that lithium hydroxystearate be contained. Among these, a lithium hydroxystearate that is a reaction product of hydrogenated castor oil (a triglyceride mixture of saturated-unsaturated fatty acids having 16, 18 carbon atoms) and a lithium hydroxide is particularly preferable.

The content of the thickener is preferably such an amount that the penetration of the grease composition can be adjusted to 235 to 385, and specifically is preferably 2 to 17% by mass, more preferably 4 to 15% by mass, and further preferably 5 to 12% by mass.

Note that "% by mass" in the present Specification is based on the total mass of the composition.

### [Base Oil]

As a base oil of the present invention, a mineral oil, a synthetic oil, or a mixture of these can be used. As the mineral oil, any of a naphthenic mineral oil and a paraffinic mineral oil can be used. The synthetic oil includes a synthetic hydrocarbon oil, an ester oil, an ether oil, a fluorine oil, and the like. The synthetic hydrocarbon oil includes alkylcyclopentane, polyalphaolefin oil, and the like, the ester oil includes a diester oil, a polyolester oil, an aromatic ester oil, and the like, the ether oil includes a dialkyl diphenyl ether oil, an alkyl triphenyl ether oil, an alkyl tetraphenyl ether oil, and the like, and the fluorine oil includes perfluoropolyether and the like. Note that the synthetic oil may be a so-called biomass oil produced by using a biological resource derived from an animal or a plant, or the like as a raw material. For example, biomass ester oils synthesized from various fatty acids using vegetable oils as raw materials and an alcohol and biomass hydrocarbon oil using vegetable oils such as palm oil, corn oil, and soybean oil may be used.

The base oil of the present invention is preferably a synthetic hydrocarbon oil and/or a mineral oil, the base oil which has a kinematic viscosity at 40°C of 15 to 180 mm²/s. Using such a base oil makes it possible to maintain a favorable low-temperature operability of rack and pinion gear portions and inhibit an operation failure of the rack and pinion gear portion.

The kinematic viscosity at 40°C of the base oil is preferably 15 to 120 mm²/s.

The synthetic hydrocarbon oil is preferably poly-α-olefin. To achieve a favorable low-temperature fluidity of the grease, the base oil preferably contains a synthetic hydrocarbon oil, and more preferably contains poly-α-olefin.

The kinematic viscosity at 40°C of the poly-α-olefin is preferably within such a range that the kinematic viscosity at 40°C of the entire base oil becomes 15 to 180 mm²/s, but is more preferably 15 to 70 mm²/s, and further preferably 25 to 70 mm²/s.

The kinematic viscosity at 40°C of the mineral oil is preferably within such a range that the kinematic viscosity at 40°C of the entire base oil becomes 15 to 180 mm²/s, but is more preferably 20 to 150 mm²/s, and further preferably 30 to 150 mm²/s.

Particularly, the base oil of the present invention is preferably a mixture of poly-α-olefin and a mineral oil (which can be, for example, a mixture of poly-α-olefin and a mineral oil in 100:0 to 10:90, and preferably 70:30 to 30:70 (mass ratio)), and more preferably is a mixture of poly-α-olefin, a naphthenic mineral oil, and a paraffinic mineral oil.

The base oil is preferably a base oil which contains a synthetic hydrocarbon oil having a kinematic viscosity at 40°C of 15 to 70 mm²/s and which has a kinematic viscosity at 40°C of 15 to 180 mm²/s, more preferably a base oil which contains poly-α-olefin having a kinematic viscosity at 40°C of 25 to 70 mm²/s and which has a kinematic viscosity at 40°C of 25 to 180 mm²/s, further preferably a base oil which is a mixture of poly-α-olefin having a kinematic viscosity at 40°C of 25 to 70 mm²/s and a mineral oil and which has a kinematic viscosity at 40°C of 40 to 120 mm²/s, and further particularly preferably a base oil which is a mixture of poly-α-olefin having a kinematic viscosity at 40°C of 25 to 70 mm²/s, a naphthenic mineral oil, and a paraffinic mineral oil and which has a kinematic viscosity at 40°C of 40 to 120 mm²/s.

The content of the base oil is preferably 75 to 90% by mass, and more preferably 80 to 90% by mass, based on the total mass of the composition, from the viewpoint of lubricity.

### [Additive]

The grease composition of the present invention contains 0.1 to 10% by mass of a molybdenum-containing extreme-pressure agent, 0.1 to 10% by mass of disodium sebacate, and 0.1 to 5.0% by mass of a sulfonate as an additive.

The molybdenum-containing extreme-pressure agent mainly exhibits wear resistance in the present invention. The molybdenum-containing extreme-pressure agent which can be used in the present invention includes organic molybdenums, and may be, for example, oil-soluble or non-oil-soluble molybdenum dithiocarbamate, preferably non-oil-soluble molybdenum dithiocarbamate, more preferably non-oil-soluble molybdenum dialkyldithiophosphate, particularly preferably non-oil-soluble molybdenum dibutyldithiocarbamate, or the like.

In the present invention, by setting the content of the molybdenum-containing extreme-pressure agent to 0.1 to 10% by mass, favorable wear resistance of rack and pinion gear portions can be maintained. The content of the molybdenum-containing extreme-pressure agent is preferably 0.5 to 5.0% by mass. It is more preferable that 0.5 to 5.0% by mass of an organic molybdenum be contained. It is particularly preferable that 0.5 to 5.0% by mass of molybdenum dibutyldithiocarbamate be contained.

Disodium sebacate is normally used as a corrosion inhibitor. In the present invention, the disodium sebacate also plays a role as an extreme-pressure agent together with the molybdenum-containing extreme-pressure agent and the sulfonate.

In the present invention, by setting the content of the disodium sebacate to 0.1 to 10% by mass, favorable fretting resistance and wear resistance of rack and pinion gear portions can be maintained. The content of the disodium sebacate is preferably 0.5 to 3% by mass.

A sulfonate is generally used as a metal-based detergent dispersant for use in a lubricating oil such as an engine oil, and a rust inhibitor of a lubricant such as a grease. In the present invention, the sulfonate also plays a role in improving an extreme-pressure performance.

The sulfonate which can be used in the present invention includes a Ca sulfonate, a Ba sulfonate, a Na sulfonate, and the like. Among these, a Ca sulfonate is preferable. As a Ca sulfonate, an overbased sulfonate (having a base number of 375 mg KOH/g or more as measured in accordance with JIS K 2501, for example) may be contained, but a neutral Ca sulfonate is more preferable. Among neutral Ca sulfonates, neutral calcium dinonylnaphthalene sulfonate is preferable.

In the present invention, by setting the content of the sulfonate to 1 to 5% by mass, favorable wear resistance of a rack bar and a yoke pad as well as rack and pinion gear portions can be maintained. The content of the sulfonate is preferably 0.5 to 2% by mass. It is more preferable that 0.5 to 2% by mass of a neutral Ca sulfonate be contained. It is particularly preferable that 0.5 to 2% by mass of neutral calcium dinonylnaphthalene sulfonate be contained.

Without being bound to any theory, it is considered that the disodium sebacate and the sulfonate contained in the grease composition of the present invention work together to exhibit excellent corrosion inhibition effect and rust inhibition effect, and thus exhibit high inhibition effects against not only corrosion wear but also fretting wear which is said to involve adhesive wear, abrasive wear, surface fatigue wear, and the like.

The additive of the present invention particularly preferably contains 0.5 to 5% by mass, 0.5 to 3% by mass, and 0.5 to 2.0% by mass of non-oil-soluble molybdenum dibutyldithiocarbamate, disodium sebacate, and neutral calcium dinonylnaphthalene sulfonate, respectively.

The grease composition of the present invention may contain an additive other than the above-described three components. Such an additive includes, for example, an antioxidant (for example, an amine antioxidant, preferably a reaction product of N-phenyl benzenamine and 2.4.4-trimethylpentene), a rust inhibitor, a metal corrosion inhibitor, an oiliness improver, an anti-wear agent, a solid lubricant, and the like. The content of these other additives is normally 0.1 to 5% by mass, and preferably 0.5 to 3% by mass.

As the grease composition of the present invention, a grease composition having a penetration of 250 to 300 in which the thickener is lithium hydroxystearate which is a reaction product of hydrogenated castor oil (a triglyceride mixture of saturated-unsaturated fatty acids having 16,18 carbon atoms) and a lithium hydroxide, the base oil is a mixture of poly-α-olefin having a kinematic viscosity at 40°C of 25 to 70 mm²/s, a naphthenic mineral oil, and a paraffinic mineral oil, the mixture having a kinematic viscosity at 40°C of 40 to 120 mm²/s, and the additive contains 1 to 3% by mass of non-oil-soluble molybdenum dibutyldithiocarbamate, 1 to 3% by mass of disodium sebacate, and 0.5 to 2% by mass of neutral calcium dinonylnaphthalene sulfonate and may contain 0.1 to 1% by mass of an antioxidant (for example, an amine antioxidant, preferably a reaction product of N-phenyl benzenamine and 2.4.4-trimethylpentene) in some cases is particularly preferable.

The grease composition of the present invention can be applied between sliding members, for example, to a rack-and-pinion-type steering device. The grease composition of the present invention can also be applied to lubrication between a yoke pad and a rack bar. It is preferable that the yoke pad of a support yoke included in the above-described steering device be made of a polyamide or PTFE.

### Examples

### <Preparation of grease compositions>

Grease compositions of Example and Comparative Examples were prepared by using components described below. Specifically, hydrogenated castor oil and lithium hydroxide monohydrate were reacted in a base oil having a kinematic viscosity at 40°C of 72.5 mm²/s, followed by heating and cooling. Thereafter, the reaction product was kneaded using a three roll mill to obtain a base grease. To the base grease, an additive shown in Table 1 was blended, and the base oil was further added such that the penetration became 265±15, followed by dispersing using a three roll mill to obtain grease compositions of Example and Comparative Examples each having a penetration of 265±15. Note that in addition to the additive shown in Table 1, 0.5% by mass of a reaction product of N-phenyl benzenamine and 2.4.4-trimethylpentene was added as an antioxidant.

Note that the kinematic viscosity of the base oil was measured in accordance with JIS K 2283. The penetration means 60-stroke worked penetration, and was measured in accordance with JIS K 2220 7.

### <Raw Materials of grease compositions of Example and Comparative Examples>

### [Thickener]

- Hydrogenated castor oil (a triglyceride mixture of saturated-unsaturated fatty acids having 16, 18 carbon atoms)
- Lithium hydroxide monohydrate

### [Base oil]

- Poly-alpha-olefin (kinematic viscosity at 40°C: 48 mm²/s)
- Naphthenic mineral oil (kinematic viscosity at 40°C: 115 mm²/s)
- Paraffinic mineral oil (kinematic viscosity at 40°C: 93 mm²/s)

### [Molybdenum-containing extreme-pressure agent]

- Molybdenum dibutyldithiocarbamate (non-oil-soluble, trade name "ADEKA SAKURA-LUBE 600")

### [Disodium sebacate]

- Disodium sebacate (trade name "IRGACOR DSS G")

### [Sulfonate]

- Neutral Ca sulfonate (calcium dinonylnaphthalene sulfonate, trade name "NA-SUL 729")
- Overbased Ca sulfonate (trade name "LUBRIZOL 5283C")

### <Evaluation of fretting wear resistance by Fafnir test>

- Fafnir friction oxidation test (in compliance with ASTMD 4170)
- The test grease was applied to two pairs of test thrust bearings described below, and a specified oscillation operation was conducted to obtain a wear amount (weight loss due to fretting wear).

### [Test conditions]

Bearing: ANDREWSW 5/8
Load: 2450 N (550 lbf) (surface pressure: 1861 MPa)
Oscillation angle: ±6°
Oscillation cycle: 30 Hz
Time: 22 h
Temperature: 25°C
Amount of grease enclosed: 1.0 g per pair of bearings

### <Evaluation of extreme-pressure performance by high-speed four-ball load-carrying capability test>

The weld point (W. P.) was measured in accordance with ASTM D 2596-97.

### • Test conditions

Rotational speed: 1770 rpm
Test time: 10 sec

**Table 1**

| | | | Ex. 1 | Comp. Ex. 1 | Comp. Ex. 2 | Comp. Ex 3 |
|---|---|---|---|---|---|---|
| Thickener | Li hydroxystearate | % | 9.7 | 9.7 | 9.7 | 9.7 |
| Base oil | PAO and mineral oils | % | 84.8 | 86.8 | 86.8 | 85.8 |
| Additive | Molybdenum-containing extreme-pressure agent | % | 2 | 2 | 2 | 2 |
| | Disodium sebacate | % | 2 | 0 | 0 | 2 |
| | Neutral Ca sulfonate | % | 1 | 0 | 1 | 0 |
| | Overbased Ca sulfonate | % | 0 | 1 | 0 | 0 |
| Fafnir test | Wear amount | mg | 1.7 | 8.6 | 3.4 | 6.3 |
| High-speed four-ball load-carrying capability test | W. P. | N | 3089 | 2452 | 2452 | 3089 |

In Example 1, both of the fretting wear resistance evaluated by the Fafnir test and the extreme-pressure performance evaluated by the high-speed four-ball load-carrying capability test were significantly improved. In Comparative Example 3, although the extreme-pressure performance was at the same favorable level as in Example 1, the fretting wear resistance was inferior to Example 1. In Comparative Example 2, the fretting wear resistance was improved as compared with Comparative Example 3 but was significantly inferior to Example 1. On the other hand, the extreme-pressure performance of Comparative Example 2 was at an acceptable good level. In Comparative Example 1, the fretting wear resistance was greatly inferior to Example 1, the extreme-pressure performance was at an acceptable good level.

## Claims

1. A grease composition comprising a thickener, a base oil, and an additive, wherein the additive contains 0.1 to 10% by mass of a molybdenum-containing extreme-pressure agent, 0.1 to 10% by mass of Na sebacate, and 0.1 to 5% by mass of a sulfonate, and a penetration of the grease composition is 235 to 370.

2. The grease composition according to claim 1, wherein the thickener contains Li hydroxystearate.

3. The grease composition according to claim 1, wherein a content of the molybdenum-containing extreme-pressure agent is 0.5 to 5.0% by mass.

4. The grease composition according to claim 1, wherein an amount of the Na sebacate added is 0.5 to 5.0% by mass.

5. The grease composition according to claim 1, wherein the sulfonate is a neutral Ca sulfonate, and a content of the neutral Ca sulfonate is 0.5 to 2.0% by mass.

6. The grease composition according to claim 1, wherein the penetration of the grease composition is 250 to 350.

7. The grease composition according to claim 1, wherein the base oil is a synthetic hydrocarbon oil and/or a mineral oil and has a kinematic viscosity at 40°C of 15 to 180 mm²/s.

8. A rack-and-pinion-gear-type steering device filled with the grease composition according to any one of claims 1 to 7.

## Patentansprüche

1. Schmierfettzusammensetzung, die ein Verdickungsmittel, ein Grundöl und einen Zusatzstoff umfasst, wobei der Zusatzstoff 0,1 bis 10 Masse-% eines molybdänhaltigen Hochdruckadditivs, 0,1 bis 10 Masse-% Na-Sebacat und 0,1 bis 5 Masse-% eines Sulfonats enthält und eine Penetration der Schmierfettzusammensetzung 235 bis 370 beträgt.

2. Schmierfettzusammensetzung nach Anspruch 1, wobei das Verdickungsmittel Li-Hydroystearat umfasst.

3. Schmierfettzusammensetzung nach Anspruch 1, wobei ein Gehalt des molybdänhaltigen Hochdruckadditivs 0,5 bis 5,0 Mase-% beträgt.

4. Schmierfettzusammensetzung nach Anspruch 1, wobei eine Menge des beigemengten Na-Sebacats 0,5 bis 5,0 Masse-% beträgt.

5. Schmierfettzusammensetzung nach Anspruch 1, wobei das Sulfonat ein neutrales Ca-Sulfonat ist und ein Gehalt des neutralen Ca-Sulfonats 0,5 bis 2,0 Masse-% beträgt.

6. Schmierfettzusammensetzung nach Anspruch 1, wobei die Penetration der Schmierfettzusammensetzung 250 bis 350 beträgt.

7. Schmierfettzusammensetzung nach Anspruch 1, wobei das Grundöl ein synthetisches Kohlenwasserstofföl und/oder ein Mineralöl ist und bei 40°C eine kinematische Viskosität von 15 bis 180 mm²/s aufweist.

8. Zahnstangengetriebe-Lenkvorrichtung, die mit der Schmierfettzusammensetzung nach einem der Ansprüche 1 bis 7 gefüllt ist.

## Revendications

1. Composition de graisse comprenant un épaississant, une huile de base, et un additif, dans laquelle l'additif contient 0,1 à 10 % en masse d'un agent extrême pression contenant du molybdène, 0,1 à 10 % en masse de sébaçate de Na, et 0,1 à 5 % en masse d'un sulfonate, et la pénétration de la composition de graisse est de 235 à 370.

2. Composition de graisse selon la revendication 1, dans laquelle l'épaississant contient de l'hydroxystéarate de Li.

3. Composition de graisse selon la revendication 1, dans laquelle la teneur en l'agent extrême pression contenant du molybdène est de 0,5 à 5,0 % en masse.

4. Composition de graisse selon la revendication 1, dans laquelle la quantité du sébaçate de Na ajouté est de 0,5 à 5,0 % en masse.

5. Composition de graisse selon la revendication 1, dans laquelle le sulfonate est un sulfonate de Ca neutre, et la teneur en le sulfonate de Ca neutre est de 0,5 à 2,0 % en masse.

6. Composition de graisse selon la revendication 1, dans laquelle la pénétration de la composition de graisse est de 250 à 350.

7. Composition de graisse selon la revendication 1, dans laquelle l'huile de base est une huile hydrocarbonée synthétique et/ou une huile minérale et a une viscosité cinématique à 40 °C de 15 à 180 mm²/s.

8. Dispositif de direction du type à pignon et crémaillère garni de la composition de graisse selon l'une quelconque des revendications 1 à 7.
